# EUROPEAN PATENT SPECIFICATION

(11) **EP 0 625 446 B1**
(45) Date of publication and mention of the grant of the patent: **11.12.1996**
(21) Application number: 94301917.4
(22) Date of filing: 17.03.1994
(51) Int. Cl.: B60R 13/04, B60J 10/08

(54) **Sealing, trimming and finishing strips**
Dicht-, Trimm- und Profilleisten
Bandes d'étanchéité, de garnissage et de finition

(30) Priority: 20.05.1993 GB 9310454
(43) Date of publication of application: 23.11.1994
(73) Proprietor: DRAFTEX INDUSTRIES LIMITED, Edinburgh EH3 6YY, Scotland (GB)
(72) Inventor: Maass, Klaus Peter, D-4060 Viersen 12 (DE)
(74) Representative: Foster, David Martyn

(56) References cited:
- EP-A- 0 280 037
- EP-A- 0 386 513
- FR-A- 1 572 985
- US-A- 5 127 193
- PATENT ABSTRACTS OF JAPAN vol. 16, no. 452 (M-1313) 21 September 1992 & JP-A-04 159 154 (TOKAI KOGYO KK) 2 June 1992
- PATENT ABSTRACTS OF JAPAN vol. 15, no. 468 (M-1184) 27 November 1991 & JP-A-03 200 421 (KINUGAWA RUBBER IND CO LTD) 2 September 1991

## Description

The invention relates to a sealing, trimming or finishing strip for attachment to and along a panel-like member of varying contour, the strip having a main portion carrying a relatively flexible lip for bearing against at least part of the length of the panel-like member.

Such a strip is known from EP-A 280 037. In this known form of strip, however, the lip is required to have a varying dimension in a direction perpendicular to the length of the strip in order to be able to maintain itself in contact with the varying contour of the panel-like member. This varying dimension is obtained during manufacture by cutting off varying portions of the lip. This is a relatively complex process and is also wasteful because part of the material produced by the manufacturing process (e.g. extruding) is then immediately discarded.

In accordance with the invention, therefore, the known strip is characterised in that the lip is formed with a narrow region of reduced lip thickness running along the length of the lip, the position of the narrow region relative to the lip edge varying along the length of the lip so as to provide a predetermined lip bending line, the position of the predetermined lip bending line and the corresponding bending of the lip varying in a manner corresponding to the varying contour of the panel-like member against which the lip bears.

Sealing, trimming and finishing strips embodying the invention will now be described, by way of example only, with reference to the accompanying diagrammatic drawings in which:
Figure 1 is a perspective view of a car illustrating where one of the strips is fitted;
Figure 2 is a diagrammatic section on the line II-II of Figure 1;
Figure 3 is a diagrammatic cross-section on the line III-III of Figure 1;
Figure 4 is a diagrammatic cross-section on the line IV-IV of Figure 1;
Figure 5 is a perspective view of the strip showing the form which it has along most of its length;
Figure 6 is a perspective view corresponding to Figure 5 but showing the form which the strip has at a local region along its length; and
Figure 7 is a diagrammatic cross-section corresponding to Figure 2 but illustrating a strip not embodying the invention.

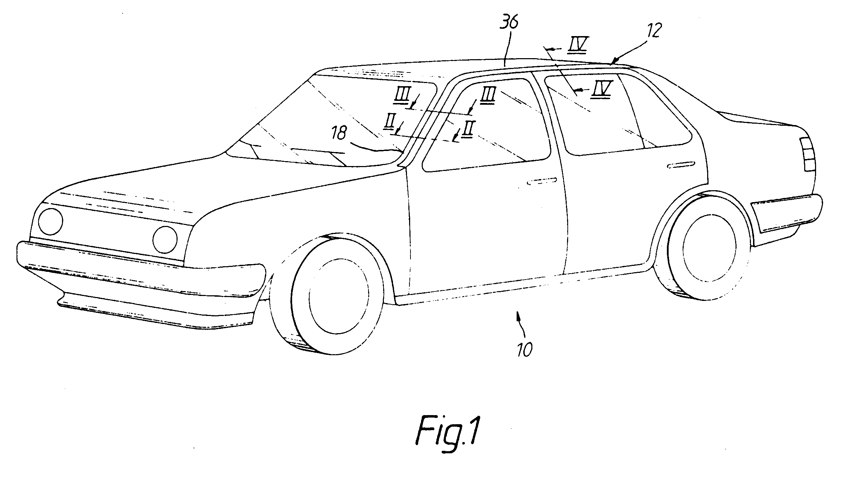

As shown in Figure 1, a motor vehicle body 10 has a sealing, trimming or finishing strip diagrammatically illustrated at 12 which runs along the roof line and down the "A" pillar of the vehicle - that is, the body pillar at the front edge of the front door of the vehicle. The purpose of the strip is to provide trimming and finishing for the junction between the roof of the vehicle and that portion of the side of the vehicle forming the upper part of the frame of the doors, and possibly to hide any welds along that junction, and to carry a seal against which the closing door seals. The strip may also function as a water guide or gutter for channelling water on the roof of the vehicle so that it runs down the "A" pillar of the vehicle and not vertically downwards over the doors or into the door openings if the doors are not closed.

In order to perform its function properly, the strip needs to make contact with the body along most if not all of its length and therefore has to take into account variations in the contour of the body along the length of the strip. It needs to take account of such contour variations in a manner which does not impose excessive manufacturing problems and hence excessive manufacturing costs. In addition, it must present a neat external appearance along its length, in spite of the contour variations.

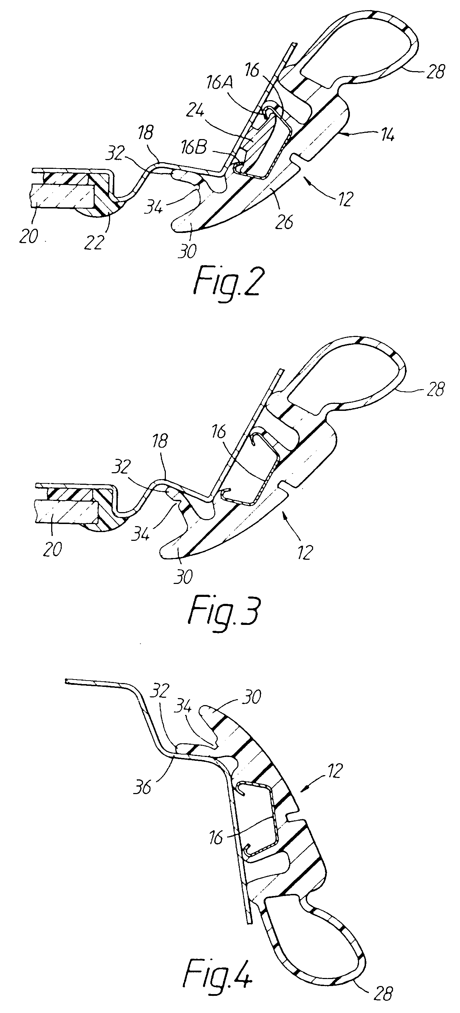

Figure 2 shows a cross-section through the strip 12 taken on the line II-II of Figure 1. As shown, the strip is made of extruded plastics or rubber material 14 and is carried by a metal channel 16. The metal channel 16 may be incorporated into the rubber 14 by an extrusion process such as a cross-head extrusion process in which the pre-formed metal channel 16 is fed through an extrusion die into which the rubber or plastics material is also fed so as to emerge with the appropriate profile and with the metal channel 16 incorporated in it.

The metal channel 16 secures the strip 12 to the vehicle body which, in this case, is the "A" pillar part of whose profile is shown at 18. Figure 2 also diagrammatically shows part of the adjacent windscreen glass 20 and its fixing material 22.

For mounting the strip 12 in position, the vehicle body is provided with a series of studs placed at intervals up the "A" pillar and along the roof line. One of these studs is diagrammatically shown at 24. The studs may be secured in position on the vehicle bodywork by welding, for example. As indicated in Figure 2, the edges 16A and 16B of the channel 16 are turned back on themselves along the edges of the open mouth of the channel and lock under the head of the stud 24. The metal channel 16 is sufficiently resilient to enable it to be clipped over the studs so as to fit the strip 12 in position along its entire length. The studs are not shown in any of the other Figures.

The extruded plastics or rubber material 14 has a relatively stiff base part 26 which is integral with a hollow sealing part 28 made of more flexible, but integrally extruded, material. The strip 12 is mounted in position on the "A" pillar 18 so that the sealing part 28 runs along the edge of the "A" pillar forming the frame for the front door of the vehicle. The closing door thus closes onto the sealing part 28, partially compressing it and thus providing a moisture and weather seal. In practice, the sealing part 28 may provide only part of the seal between the periphery of the door and its frame; for example, the door may carry a further seal for engaging the sealing part 28 and/or the actual frame of the door opening.

Along its other longitudinal edge, the strip 12 is formed with a relatively stiff external lip 30. On the inner side of this lip 30 (that is, the side facing towards the vehicle body), a more flexible inner lip 32 is provided. This lip flexes and thus bears against the body panel 18 forming the "A" pillar.

In accordance with a feature of the invention, the flexible lip 32 is pre-formed with a groove 34 extending longitudinally along the length of the strip. The groove 34 is pre-formed during the manufacturing process; for example, it may be pre-formed during the extrusion process described above.

The groove 34 is pre-positioned in the inner lip 32 so as to provide a preferred bending line for the lip 32 which is selected in dependence on the contour of the adjacent body panel against which the lip bears. This feature is illustrated by comparing Figure 2 with Figure 3 which is a cross-section on the line III-III of Figure 1. As indicated in Figure 3, the contour of the body panel forming the "A" pillar at the position where the cross-section of Figure 3 is taken is slightly different from the corresponding contour shown in Figure 2. Figure 3 shows how the groove 34 is positioned differently from the position shown in Figure 2: in Figure 3, the groove 34 is closer to the distal end of the inner lip 32. The preferred bending line in Figure 3 is thus differently positioned from the position shown in Figure 2 and the bending of the inner lip 32 is thus different from the bending of the lip shown in Figure 2 and therefore accommodates the different contour of the body panel 18.

In this way, therefore, the degree of bending of the inner lip 32, and the position of the bending line, is varied along the length of the strip according to the variations in the contour of the adjacent bodywork, so that the relatively stiff outer lip 30 remains in substantially the same position and attitude, relative to the remainder of the strip 12, along the length of the strip.

Figure 4, being a cross-section on the line IV-IV of Figure 1, shows how the position of the groove 34 is further varied along the roof line of the vehicle so as to enable a greater degree of bending of the inner lip 32 to accommodate the altered contour of the body panel 36 adjacent the roof line.

The body panel 36 may have a substantially constant profile along the roof line, in which case the groove 34 would have a constant position along the length of the roof line, as shown in Figure 4. However, the design of the body may be such that the contour of the body panel 36 varies slightly along the length of the roof line, for styling or other purposes. In such a case, therefore, the position of the groove 34 would be correspondingly varied so as to ensure that the bending line, and thus the actual bending, of the inner lip 32 was correspondingly varied - again with the aim of ensuring that the outer lip 30 remained at a substantially constant attitude relative to the remainder of the strip 12.

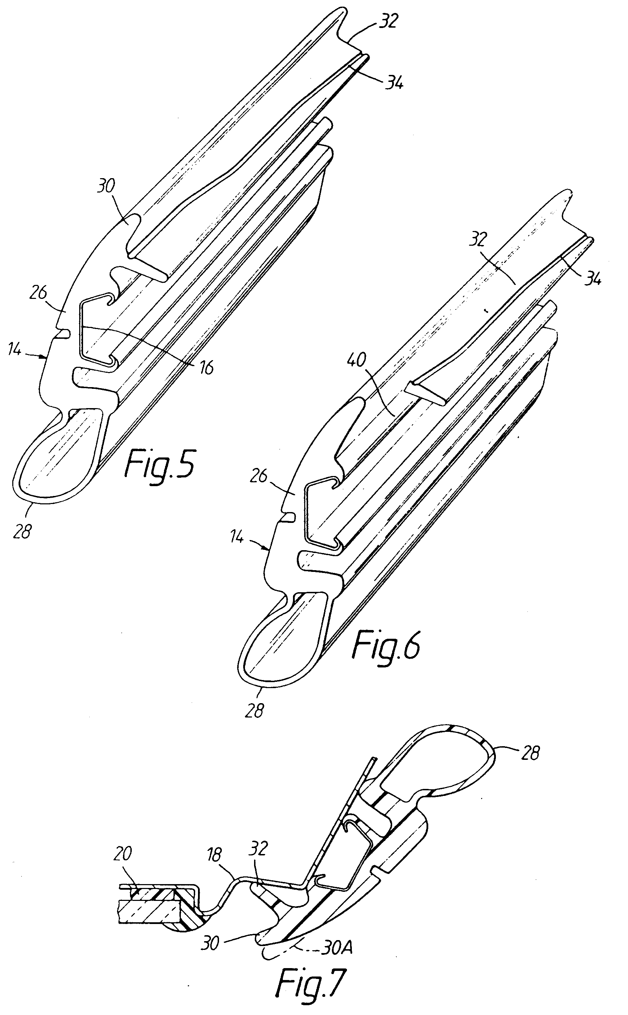

Figure 5 is a perspective view of the sealing strip 12 embodying the invention and diagrammatically illustrates the groove 34 and how its position in the surface of the inner lip 32 varies along the length of the strip in dependence on the changing profile of the vehicle body.

At the lowermost end of the "A" pillar, that is, below the line I-I of Figure 1, the inner lip 30 may be cut away completely as shown at 40 in Figure 6 so as to ensure that water running down the "A" pillar is directed in the appropriate direction. The lip 32 is cut away in this region so that the cut edge of the lip is clear of the vehicle bodywork.

The manufacturing process for the strip 12 is relatively simple and inexpensive. Clearly, the variations in profile of the vehicle bodywork are known and it is thus a simple matter to arrange for the groove 34 to be appropriately positioned along the length of the strip to match such variations. Nevertheless, because the lip 32 is relatively flexible, and because it has sufficient extension so that a significant part of its surface is always in contact with the vehicle bodywork (except where it is cut off in the region 40), a certain amount of tolerance in the shape of the vehicle bodywork or the mounting of the strip on the studs 24 or in the profile of the strip itself can be easily accommodated. There is thus always sufficient of the lip 32 in face to face contact with the bodywork to ensure effective sealing. At the same time, though, the predetermined positioning of the groove 34 ensures that the corresponding bending of the inner lip 32, varying along the length of the strip, enables the outer lip 30 to have a constant attitude. The "styling line" of the strip is thus maintained substantially unchanged along the length of the strip, providing a pleasing appearance.

Figure 7 corresponds to Figure 2 but shows a strip not having the groove 34. The absence of the groove 34 in Figure 7 has the result that the inner lip 32 is not able to bend or flex adequately in order to adjust to the contour of the adjacent body panel 18, therefore having the result that the outer lip 30 is forced outwardly to the position shown at 30A. This results in an unsightly appearance. Furthermore, effective sealing between the inner lip and the body panel is destroyed.

## Claims

1. A sealing, trimming or finishing strip (12) for attachment to and along a panel-like member (18,36) of varying contour, the strip (12) having a main portion (26) carrying a relatively flexible lip (32) for bearing against at least part of the length of the panel-like member (18,36), characterised in that the lip (32) is formed with a narrow region (34) of reduced lip thickness running along the length of the lip, the position of the narrow region (34) relative to the lip edge varying along the length of the lip (32) so as to provide a predetermined lip bending line, the position of the predetermined lip bending line and the corresponding bending of the lip varying in a manner corresponding to the varying contour of the panel-like member (18,36) against which the lip bears.

2. A strip according to claim 1, characterised in that the narrow region comprises a groove (34).

3. A strip according to claim 1 or 2, characterised in that along part (40), only, of the length of the strip, the lip (32) is shaped so as to be completely clear of the panel-like member (18,36).

4. A strip according to any preceding claim, characterised in that it incorporates metal reinforcement (16).

5. A strip according to any one of claims 1 to 3, characterised by mounting means (24,16) for mounting the main portion (26) of the strip (12) relative to the panel-like member (18,36), and in that the position of the narrow region (34) along the length of the strip is such that the attitude of the main portion (26) relative to the mounting means (24,16) is substantially constant along the length of the strip.

6. A strip according to claim 5, characterised in that it incorporates metal reinforcement (16), and in that the mounting means comprises means (24) on the panel-like member (18,36) for co-operating with the metal reinforcement (16).

7. A strip according to any preceding claim, characterised in that the panel-like member (18,36) is part of a motor vehicle body.

8. A strip according to claim 7, characterised in that the said panel-like member (18,36) extends along the roof line (36) of the vehicle body and along the top of a door opening therein, and in that the main portion (26) of the strip supports a sealing part (28) for providing a seal for at least part of the periphery of a door for the opening.

9. A strip according to claim 7 or 8, characterised in that the panel-like member (18) extends down the "A" pillar of the vehicle body.

10. A strip according to any preceding claim, characterised in that the said main portion (26) of the strip adjacent to the lip (32) comprises a relatively stiff further lip (30) integral with the main portion of the strip.

## Patentansprüche

1. Dicht-, Trimm- oder Profilleiste zur Befestigung an und entlang einem plattenförmigen Bauteil (18, 36) von wechselnder Kontur, wobei die Leiste (12) einen Hauptbereich (26) aufweist, der eine biegsame Lippe (32) zum Andrücken gegen wenigstens einen Teil der Länge des plattenförmigen Bauteils (18, 36) aufweist,
**dadurch gekennzeichnet,**
daß die Lippe (32) mit einem verjüngten Bereich (34) von reduzierter Lippendicke ausgebildet ist, der entlang der Länge der Lippe verläuft, wobei die Lage des verjüngten Bereichs (34) relativ zur Lippenkante entlang der Länge der Lippe (32) variiert, um für eine vorbestimmte Lippenbiegelinie zu sorgen, wobei die Lage der vorbestimmten Lippenbiegelinie und die entsprechende Biegung der Lippe in einer Weise variieren, die der wechselnden Kontur des plattenförmigen Bauteils (18, 36) entspricht, gegen die die Lippe drückt.

2. Leiste nach Anspruch 1, dadurch gekennzeichnet, daß der verjüngte Bereich eine Nut (34) beinhaltet.

3. Leiste nach Anspruch 1 oder 2, dadurch gekennzeichnet, daß die Lippe (32) nur entlang dem Teil (40) der Länge der Leiste so geformt ist, daß sie vollständig frei ist von dem plattenförmigen Bauteil (18, 36).

4. Leiste nach einem der vorhergehenden Ansprüche 1 bis 3, dadurch gekennzeichnet, daß in dieser eine metallische Verstärkung eingeschlossen ist.

5. Leiste nach einem der Ansprüche 1 bis 3, gekennzeichnet durch Befestigungsmittel (24, 16) zum Befestigen des Hauptbereichs (26) der Leiste (12) relativ zum plattenförmigen Bauteil (18, 36) sowie dadurch, daß die Lage des verjüngten Bereichs (34) entlang der Länge der Leiste derart ist, daß die Lage des Hauptbereichs (26) relativ zu den Befestigungsmitteln (24, 16) entlang der Länge der Leiste im wesentlichen konstant ist.

6. Leiste nach Anspruch 5, dadurch gekennzeichnet, daß in dieser eine metallische Verstärkung eingeschlossen ist sowie dadurch, daß das Befestigungsmittel ein Mittel (24) auf dem plattenförmigen Bauteil (18, 36) umfaßt, um mit der metallischen Verstärkung (16) zusammenzuwirken.

7. Leiste nach einem der vorhergehenden Ansprüche 1 bis 6, dadurch gekennzeichnet, daß das plattenförmige Bauteil (18, 36) ein Teil einer Kraftfahrzeugkarosserie ist.

8. Leiste nach Anspruch 7, dadurch gekennzeichnet, daß sich das plattenförmige Bauteil (18, 36) entlang der Dachkante der Fahrzeugkarosserie und entlang der Oberkante der darin befindlichen Türöffnung erstreckt sowie dadurch, daß der Hauptbereich (26) der Leiste ein Dichtungsteil (28) trägt, um eine Abdichtung für wenigstens einen Teil des Umfangs einer Türöffnung zu bilden.

9. Leiste nach Anspruch 7 oder 8, dadurch gekennzeichnet, daß sich das plattenförmige Bauteil (18) abwärts entlang der "A"-Säule der Fahrzeugkarosserie erstreckt.

10. Leiste nach einem der vorhergehenden Ansprüche 1 bis 9, dadurch gekennzeichnet, daß der Hauptbereich (26) der Leiste in der Nähe der Lippe (32) eine einstückig mit dem Hauptbereich der Leiste ausgebildete relative steife weitere Lippe (30) umfaßt.

## Revendications

1. Moulure d'étanchéité, de garniture ou de finition (12) destinée à être fixée à un élément en forme de panneau (18, 36) de contour variable et le long de cet élément, la moulure (12) ayant une portion principale (26) qui porte une lèvre relativement flexible (32) destinée à porter contre au moins une partie de la longueur de l'élément en forme de panneau (18, 36), caractérisée en ce que la lèvre (32) est munie d'une région étroite (34) dans laquelle l'épaisseur de la lèvre est réduite, qui court selon la longueur de la lèvre, la position de la région étroite (34) par rapport au bord de la lèvre variant sur la longueur de la lèvre (32) de manière à former une ligne prédéterminée de pliage de la lèvre, la position de la ligne prédéterminée de pliage de la lèvre et la section correspondante de la lèvre variant d'une façon qui correspond au contour variable de l'élément en forme de panneau (18, 36) contre lequel la lèvre porte.

2. Moulure selon la revendication 1, caractérisée en ce que la région étroite constitue une rainure (34).

3. Moulure selon la revendication 1 ou 2, caractérisée en ce que, le long d'une partie (40) de la longueur de la moulure, et seulement le long de cette partie, la lèvre (32) est conformée de manière à être entièrement dégagée de l'élément en forme de panneau (18, 36).

4. Moulure selon une quelconque des revendications précédentes, caractérisée en ce qu'elle comprend un renforcement métallique (16).

5. Moulure selon une quelconque des revendications 1 à 3, caractérisée par des moyens de montage (24, 16) servant à monter la portion principale (26) de la moulure (12) par rapport à l'élément en forme de panneau (18, 36) et en ce que la position de la région étroite (34) sur la longueur de la moulure est telle que l'attitude de la portion principale (26) par rapport aux moyens de montage (24, 16) soit sensiblement constante sur la longueur de la moulure.

6. Moulure selon la revendication 5, caractérisée en ce qu'elle comprend un renforcement métallique (16) et en ce que les moyens de montage comprennent des moyens (24) prévus sur l'élément en forme de panneau (18, 36) pour coopérer avec le renforcement métallique (16).

7. Moulure selon une quelconque des revendications précédentes, caractérisée en ce que l'élément en forme de panneau (18, 36) fait partie d'une caisse de véhicule automobile.

8. Moulure selon la revendication 7, caractérisée en ce que ledit élément en forme de panneau (18, 36) s'étend le long de la ligne de pavillon (36) de la caisse du véhicule et le long de la partie supérieure d'une baie de porte ménagée dans cette caisse et en ce que la portion principale (26) de la moulure supporte une partie d'étanchéité (28) destinée à former un joint étanche sur au moins une partie de la périphérie de la porte correspondant à l'ouverture.

9. Moulure selon la revendication 7 ou 8, caractérisée en ce que l'élément en forme de panneau (18) s'étend en descendant le long du montant "A" de la caisse du véhicule.

10. Moulure selon une quelconque des revendications précédentes, caractérisée en ce que ladite portion principale (26) de la moulure qui est adjacente à la lèvre (32) est constituée par une autre lèvre (30) relativement rigide, d'une seule pièce avec la portion principale de la moulure.
